# EUROPÄISCHE PATENTSCHRIFT

(11) **EP 0 918 667 B1**
(45) Veröffentlichungstag und Bekanntmachung des Hinweises auf die Patenterteilung: **06.11.2002**
(21) Anmeldenummer: 97918881.0
(22) Anmeldetag: 08.08.1997
(51) Int. Cl.: B60R 21/32, F42B 3/113

(54) **SYSTEM ZUM AUSLÖSEN EINES RÜCKHALTEMITTELS IN EINEM KRAFTFAHRZEUG**
SYSTEM FOR TRIGGERING A RESTRAINT SYSTEM IN A MOTOR VEHICLE
DISPOSITIF DE DECLENCHEMENT D'UN SYSTEME DE RETENUE DANS UN VEHICULE A MOTEUR

(30) Priorität: 19.08.1996 DE 19633409; 19.08.1996 DE 19633410
(43) Veröffentlichungstag der Anmeldung: 02.06.1999
(73) Patentinhaber: SIEMENS AKTIENGESELLSCHAFT, 80333 München (DE)
(72) Erfinder: SWART, Marten, D-93083 Obertraubling (DE); DIRMEYER, Josef, D-92439 Bodenwöhr (DE); WICKE, Markus, D-93138 Lappersdorf (DE); KUHN, Gerhard, D-93096 Köfering (DE); ACKLIN, Bruno, D-93059 Regensburg (DE)
(86) Internationale Anmeldenummer: DE9701700
(87) Internationale Veröffentlichungsnummer: WO98007600

(56) Entgegenhaltungen:
- EP-A- 0 289 184
- WO-A-93/26031
- DE-A- 4 015 045
- DE-A- 4 224 166
- DE-C- 4 313 571
- FR-A- 2 641 860
- US-A- 4 059 822
- US-A- 4 917 014
- US-A- 5 036 767
- US-A- 5 572 016

## Beschreibung

Die Erfindung betrifft ein System zum Auslösen eines Rückhaltemittels in einem Kraftfahrzeug gemäß Oberbegriff von Patentanspruch 1.

Eine entsprechende Anordnung (EP 0 641 689 A2) zündet die Anzünder der zugeordneten Rückhaltemittel durch Lichtsignale. Die bekannte Anordnung weist dazu eine Auslöseeinrichtung auf, welche eine Steuerschaltung zum Steuern einer Lichtquelle enthält. Ein Lichtwellenleiter dient zum Übertragen eines von der Lichtquelle ausgesendeten optischen Zündsignals zum Anzünder. Das monochrome Zündsignal weist eine ausreichend hohe Energie zum optischen Zünden des im Anzünder enthaltenen Zündmaterials auf.

Die bekannte Anordnung weist keinerlei Funktionsüberwachung des aus Lichtwellenleiter und Anzünder bestehenden Zündkreises auf. Weist der aus Lichtwellenleiter und Anzünder bestehende Zündkreis eine optische Unterbrechung auf - ist also beispielsweise der Anzünder als Folge einer Fehlmontage oder einer unsachgemäßen Reparatur nicht mehr korrekt auf den Lichtwellenleiter aufgesteckt oder weist der Lichtwellenleiter eine starke Biegung oder sogar eine Bruchstelle auf -, so kann das durch einen Auslösewunsch erzeugte hochenergetische optische Licht-/Lasersignal am Ende des Lichtwellenleiters oder an der Bruchstelle ungehindert aus dem Lichtwellenleiter austreten. Durch einen solchen austretenden hochenergetischen Lichtimpuls kann ein Insasse bzw Wartungs- oder Reparaturpersonal insbesondere an den Augen verletzt werden, wobei beispielsweise auch bei stehendem Fahrzeug in einer Werkstatt durch einen Hammerschlag gegen eine Sensoreinheit der Anordnung ein Auslösewunsch erzeugt werden kann. Ferner kann das Fahrzeug in Brand gesetzt werden. Zum anderen kann das Rückhaltemittel bei einem Unfall und fehlerbehafteten Zündkreis nicht mehr sachgemäß ausgelöst werden.

Aus der DE 42 24 166 C2 ist eine Anordnung bekannt, bei der eine Auslöseeinrichtung über einen Lichtwellenleiter mit einer Zündeinrichtung verbunden ist. Ein von der Auslöseeinrichtung an die Zündeinrichtung übermitteltes optisches Zündsignal wird in der Zündeinrichtung durch einen Wandler in ein elektrisches Signal umgesetzt, durch das ein elektrischer Anzünder der Zündeinrichtung - gewöhnlich eine Zündpille mit einem in Zündpulver eingeschlossenen Glühdraht - gezündet wird.

Bei einer solchen Anordnung sind zahlreiche opto-elektrische und elektro-optische Wandler erforderlich. Bei einem Defekt des elektrischen Teils der Zündeinrichtung kann der Lichtwellenleiter dennoch mit einem hochenergetischen optischen Zündsignal beaufschlagt werden, mit den vorbeschriebenen nachteiligen Folgen.

Aufgabe der Erfindung ist es deshalb, ein system zum optischen Zünden eines Anzünders gemäß der Druckschrift EP 0 641 489 A2 dahingehend zu verbessern, daß insbesondere ein höchstes Maß an Sicherheit für die Insassen trotz geringem Bauteile-Aufwand erzielt werden kann.

Die Aufgabe wird durch die Merkmale des Anspruchs 1 gelöst.

Veranlaßt durch die Steuerschaltung ist dabei zum einen ein optisches Zündsignal zum Zünden des Anzünders aussendbar. Bei einem Zündvorgang wird Zündmaterial im Anzünder durch die im Zündsignal enthaltene Energie zur Explosion veranlaßt, wodurch ein das Zündmaterial aufnehmendes Gehäuse des Anzünders ggf an einer Sollbruchstelle gesprengt wird und durch die freiwerdende Energie ein im Umfeld des Anzünders angeordneter Gasgenerator zum Freisetzen von Gas veranlasst wird. Das ausströmende Gas füllt beispielsweise die bekannten Airbags, kann jedoch auch zum Strammen eines Gurtstraffers als Rückhaltemittel eines Kraftfahrzeugs verwendet werden. Der Anzünder wird demzufolge direkt optisch gezündet, ohne dass dem Zündvorgang ein Umsetzen des optischen Zündsignals in ein elektrisches Signal vorangeht. Zum Übertragen des optischen Zündsignals von der Auslöseeinrichtung zum Anzünder dient ein optisches Übertragungsmittel, z.B. ein Lichtwellenleiter.

Zum anderen ist ein optisches Prüfsignal zur Funktionsüberprüfung des Zündkreises von der Auslöseeinrichtung zum Anzünder übertragbar. Die Auslöseeinrichtung wiederum enthält eine Auswerteschaltung zum Auswerten eines über das optische Übertragungsmittel, z.B. den obengenannten Lichtwellenleiter, zur Auslöseeinrichtung übertragenen und durch einen Lichtempfänger aufgenommen Lichtsignals. Damit können Lichtsignale aufgenommen und verarbeitet werden, die beispielsweise als Antwort auf ausgesendete Prüfsignale an die Auslöseeinrichtung rückübermittelt werden. Abhängig von der Auswertung des empfangenen Lichtsignals wird durch die Auswerteschaltung ein Sperrsignal erzeugt, dass ein Aussenden des Zündsignals im folgenden verhindert. Vorzugsweise wird abhängig von der Auswertung des empfangenen Lichtsignals auch eine - z.B. optische oder akustische - Warneinrichtung aktiviert, durch die der Insasse auf eine Fehlfunktion im Insassenschutzsystem, insbesondere im Zündkreis, hingewiesen wird. Ggf erfolgt auch ein Eintrag in einem programmierbaren, nichtflüchtigen Speicher.

Durch das erfindungsgemäße System kann demzufolge der Zündkreis bestehend aus optischem Übertragungsmittel und Anzünder permanent oder zyklisch oder bei Inbetriebnahme/Initialisierung des Insassenschutzsystems auf seine Funktionsfähigkeit überwacht werden, wobei bei einem entdeckten Defekt ein Aussenden eines Zündsignals verhindert wird. Der Insassenschutz ist wesentlich erhöht, ohne dass ein zusätzlicher Aufwand in Form von mehreren Lichtwellenleitern und/oder Wandlern erforderlich ist.

Vorzugsweise ist ein solches durch den Lichtempfänger der Auslöseeinrichtung aufgenommenes Lichtsignal das an einem Reflexionselement reflektierte ausgesendete Prüfsignal. Das Reflexionselement ist dabei zwischen dem anzünderseitigen Ende des Lichtwellenleiters und einem Zündmaterial des Anzünders angeordnet, wobei bei dieser wie auch bei weiteren vorteilhaften Weiterbildungen der Erfindung das optische Übertragungsmittel nicht zwingend auf einen Lichtwellenleiter beschränkt ist.

Das Prüfsignal wird bei funktionstüchtigem Lichtwellenleiter und korrekt an dem Lichtwellenleiter befestigten Anzünder am Reflexionselement vorzugsweise vollständig reflektiert und über denselben Lichtwellenleiter zur Auslöseeinrichtung rückübertragen, wo es von dem Lichtempfänger aufgenommen und von der Auswerteschaltung ausgewertet wird. Der Transmissionsgrad des Reflexionselements ist in jedem Fall derart bemessen, daß ein Großteil der Lichtintensität des Prüfsignals reflektiert wird und gegebenenfalls nur ein kleiner Lichtanteil zum Zündmaterial durchgelassen wird. Dieser kleine durchgelassene Lichtanteil darf keinesfalls zum Zünden des Anzünders führen. Zum anderen ist die Intensität des Prüfsignals sowie der Reflexionsgrad des Reflexionselements in jedem Fall so bemessen, daß das vom Lichtempfänger aufgenommene reflektierte Prüfsignal trotz Dämpfung auf dem Übertragungsweg eine/n ausreichende/n Lichtintensität/Signalpegel zur Verarbeitung aufweist und gleichzeitig deutlich unterscheidbar ist von reflektierten Prüfsignalen, welche jedoch nicht am Reflexionselement des Anzünders reflektiert wurden, sondern beispielsweise an einer Bruchstelle des Lichtwellenleiters. Bei letztgenannten fehlerbehafteten Lichtwellenleitern wird lediglich ein geringer Anteil des Prüfsignals reflektiert und zur Auslöseeinrichtung rückübertragen. Der an einer solchen Biegeoder Bruchstelle des Lichtwellenleiters reflektierte Anteil des Prüfsignals ist so stark gedämpft, daß er gut unterscheidbar von einem an dem Reflexionselement des Anzünders reflektieren Prüfsignal ist. Der weit größere Intensitätsanteil des Prüfsignals tritt an einer solchen Biege- oder Bruchstelle aus dem Lichtwellenleiter aus. Das Prüfsignal ist in jedem Fall auch so zu bemessen, daß dieser gegebenenfalls austretende Anteil des Prüfsignals keine Gefährdung für die Fahrzeuginsassen darstellt.

Ist am Ende des Lichtwellenleiters der Anzünder nicht angebracht, so tritt das Prüfsignal mit seiner nahezu gesamten Lichtintensität am Ende des Lichtwellenleiters aus. Ggf wird lediglich ein geringer Intensitätsanteil an der Stirnfläche am Ende des Lichtwellenleiters reflektiert und als äußerst stark gedämpftes Lichtsignal von der Auslöseeinrichtung aufgenommen. Von der Auswerteschaltung wird vorzugsweise dann ein Sperrsignal erzeugt, wenn auf das Aussenden eines Prüfsignals hin - vorzugsweise innerhalb einer festgelegten ersten Zeitspanne nach dem Aussenden eines Prüfsignals - kein Lichtsignal von dem Lichtempfänger beziehungsweise ein Lichtsignal mit einer äußerst geringen Lichtintensität - in jedem Fall unterhalb eines vorgegebenen Schwellwerts - aufgenommen wird, wodurch eine mangelhafte optischen Kopplung zwischen Lichtwellenleiter und Anzünder gekennzeichnet ist. Die Auswerteschaltung weist dazu Vergleichsmittel zum Vergleich des empfangenen Lichtsignals mit dem Schwellwert auf.

Bei dem erfindungsgemäßen System, bei dem ein Reflexionselement zur Funktionsüberwachung des Zündkreises verwendet wird, wird vorzugsweise auch dann ein Sperrsignal von der Auswerteschaltung erzeugt, wenn ein auf das Aussenden des Prüfsignals vom Lichtempfänger aufgenommenes Lichtsignal eine Mindestlichtintensität unterschreitet, wie es bei einem Leiterbruch oder einer starken Leiterbiegung der Fall ist. Diese Mindestlichtintensität ist größer bemessen als diejenige Lichtintensität, die bei nicht aufgestecktem Anzünder empfangen wird, da die Reflexionsstelle bei gebrochenem Lichtwellenleiter näher bei der Auslöseeinrichtung liegt und die Dämpfung des an der Bruchstelle reflektierten Signals geringer ausfällt.

Vorzugsweise wird ein Sperrsignal erzeugt, wenn das erste und/oder das zweite vorgenannte Kriterium erfüllt sind.

Mit diesen erfindungsgemäßen Lösungsvorschlägen wird demzufolge ein Leitungsbruch, eine Leitungsbiegung oder eine unzureichende optische Kopplung zwischen Lichtwellenleiter und Anzünder zuverlässig erkannt.

Weist der Lichtwellenleiter nahe an der Auslöseeinrichtung eine starke Biegestelle beziehungsweise einen Leiterbruch auf, so kann der an dieser Biege- beziehungsweise Bruchstelle reflektierte Prüfimpuls aufgrund des kurzen Leitungsweges und der somit geringen Dämpfung durchaus eine hohe Lichtintensität aufweisen, so daß gegebenenfalls eine Verwechslungsgefahr mit einem korrekt an dem Reflexionselement des Anzünders reflektierten Prüfsignal besteht. Wird deshalb festgestellt, daß ein durch den Lichtempfänger aufgenommenes Lichtsignal innerhalb einer sehr kurzen, zweiten Zeitspanne nach dem Aussenden des Prüfsignals durch die Auswerteschaltung aufgenommen wird, ist eine Biege- beziehungsweise Bruchstelle nahe an der Auslöseeinrichtung wahrscheinlich. Auch in diesem Fall wird durch die Auswerteschaltung ein Sperrsignal erzeugt. Die zweite Zeitspanne ist dabei wesentlich kürzer ausgebildet als die erste Zeitspanne, da das ausgesendete Prüfsignal innerhalb der zweiten Zeitspanne keinesfalls den gesamten Lichtwellenleiter hin und zurück durchlaufen haben darf. Die erste Zeitspanne ist dagegen derart bemessen, daß unter normalen Umständen ein von der Auslöseeinrichtung ausgesendetes Prüfsignal die Strecke von der Auslöseeinrichtung zum Anzünder und zurück mit Lichtgeschwindigkeit und ausreichendem Zeitpolster durchmessen haben muß.

Alternativ bzw vorzugsweise zusätzlich kann die Wellenlänge des empfangenen Lichtsignals überprüft werden. Weicht die Wellenlänge des empfangenen Lichtsignals von der Wellenlänge des ausgesendeten Prüfsignals ab, so wird das Sperrsignal abgesetzt, da das empfangene Lichtsignal auf ein auf den Lichtwellenleiter eingekoppeltes Fremdlicht aufgrund eines defekten Zündkreises schließen läßt.

Aufgrund des beschränkten Einbauraumes von Anzündern im Fahrzeug, beispielsweise im Lenkrad, ist es vorteilhaft, das Reflexionselement als dünne Reflexionsschicht oder als Reflexionsfolie auszubilden. Vorzugsweise wird eine dünne Aluminiumfolie verwendet. Bei einer weiteren vorteilhaften Weiterbildung der Erfindung wird die Oberfläche des Zündmaterials des Anzünders als Reflexionsschicht verwendet. Hierbei enthält das Zündmaterial beispielsweise Graphit, das zum einen aufgrund seiner Lichtabsorptionsfähigkeit gute optische Zündeigenschaften aufweist, zum anderen bei entsprechender Politur seiner Oberfläche gute Reflexionseigenschaften an derselbigen.

Ein von der Auslöseeinrichtung an den Anzünder übermitteltes hochenergetisches optisches Zündsignal wird vorzugsweise nicht von dem Reflexionselement reflektiert sondern zum Zündmaterial durchgelassen. Das Reflexionselement ist dabei derart ausgebildet, daß es bei Überschreiten einer zugeführten Mindestenergie zumindest weitgehend lichtdurchlässig wird, vorzugsweise durch seine Zerstörung infolge der mit dem Zündsignal zugeführten Energie. Diese Eigenschaft weist zum Beispiel eine dünne Aluminiumfolie auf. Bei Graphit als Zündmaterial, dessen polierte Oberfläche als Reflexionselement verwendet wird, ändert sich bei zunehmender Energiezufuhr der Transmissionsgrad zu Ungunsten des Reflexionsgrades der Graphitoberfläche.

Alternativ zum Reflexionselement kann zwischen dem Ende des Lichtwellenleiters und dem Zündmaterial ein lichterzeugendes Element zum induzierten Aussenden eines Lichtsignals angeordnet sein. Ein solches lichterzeugendes Element folgt im wesentlichen dem Funktionsprinzip eines Lasers: Durch Bestrahlung des lichterzeugenden Elements mit den Photonen des Prüfsignals werden Elektronen des lichterzeugenden Elements in einen höheren Energiezustand angehoben. Beim Zurückfallen der Elektronen auf ihr ursprüngliches energetisches Niveau werden wiederum Photonen einer festgelegten Wellenlänge ausgesendet. Diese Photonen bilden ein photoelektrisch induziertes Lichtsignal, das über den Lichtwellenleiter zur Auslöseeinrichtung übertragen wird. Wenn das Prüfsignal wie das induzierte Lichtsignal monochromatisch ausgebildet ist oder zumindest einen engen Wellenlängenbereich aufweisen, wobei sich die Wellenlängenbereiche von Prüfsignal und erzeugtem Lichtsignal unterscheiden, ist in der Auswerteschaltung der Auslöseeinrichtung ein aufgenommenes Lichtsignal des lichterzeugenden Elements anhand der Wellenlänge deutlich unterscheidbar von einem beispielsweise an einer Bruchstelle des Lichtwellenleiters reflektierten Prüfsignals. Auch wenn die optische Kopplung zwischen Lichtwellenleiter und Anzünder fehlerhaft ist, weist das von der Auswerteschaltung empfangene Lichtsignal in keinem Fall die Wellenlänge auf, mit der ein Lichtsignal vom lichterzeugenden Element abgegeben werden würde. Von der Auswerteschaltung wird insbesondere dann ein Sperrsignal zum Verhindern eines Aussendens des Zündsignals erzeugt, wenn das durch den Empfänger aufgenommene Lichtsignal eine andere Wellenlänge aufweist, als sie für durch das lichterzeugende Element abgegebene Lichtsignal festgelegt ist. Alternativ oder vorzugsweise zusätzlich kann natürlich auch die Intensität des empfangenen Lichtsignals überwacht werden. Unterschreitet diese Intensität einen Mindestschwellwert, so ist der Lichtwellenleiter z.B. durch eine starke Biegung nur noch bedingt funktionstüchtig. Die Ausgabe eines Sperrsignals ist die Folge.

Die Intensität des durch das Prüfsignal induzierten und vom lichterzeugenden Element abgegebenen Lichtsignals ist dabei so bemessen, daß das Zündmaterial durch das abgegebene Lichtsignal nicht gezündet wird.

Das lichterzeugende Element wirkt dabei als optische Pumpe und enthält vorzugsweise Galliumarsenid. Das lichterzeugende Element kann dabei als Halbleiterbauelement integriert sein und damit nur einen geringen Bauraum aufweisen.

Das lichterzeugende Element erhitzt sich bei Beaufschlagung mit ausreichender Energie derart, daß über die Erwärmung des lichterzeugenden Elements das Zündmaterial gezündet wird.

Alternativ kann zwischen dem Ende des Lichtwellenleiters und dem Zündmaterial ein lichterzeugendes Element zum induzierten Aussenden eines Lichtsignals angeordnet sein, wobei das lichterzeugende Element phosphorisierendes Material enthält. Durch optisches Anregen des phosphorisierenden Materials eben durch das optische Prüfsignal wird ein Lichtsignal vom lichterzeugenden Element abgegeben und über das optische Übertragungsmittel zurück zur Auslöseeinrichtung übermittelt, das aufgrund des im lichterzeugenden Elements enthaltenen phosphorizierenden Materials zeitlich lange andauert - in jedem Fall im Mikrosekundenbereich, vorzugsweise zwischen 1 und 10 µs - und damit auch lange Zeit für den Lichtempfänger erkennbar bleibt und in dieser Zeit von der Auswerteschaltung ausgewertet werden kann. Das vom lichterzeugenden Element abgegebene Lichtsignal weist überdies eine langsam abklingende Signalform auf. Das phosphorisiernde Material "leuchtet" nach seiner Anregung nach - wie von Markierungen aus phosphorisierndem Material beispielsweise auf Armbanduhren oder Weckern bekannt ist.

Damit kann die Auswerteschaltung in ihrer Leistung geringer ausgelegt werden, da ihr aufgrund des langandauernden empfangenen Lichtsignals mehr Zeit zur Auswertung zur Verfügung steht. Die Trennschärfe zwischen dem Prüfsignal als Erreger und dem empfangenen Lichtsignal als Antwort ist wesentlich erhöht.

Vorzugsweise wird bei Verwendung des lichterzeugenden Elements mit phosphorisierer Wirkung das von der Auslöseeinrichtung aufgenommene Lichtsignal hinsichtlich seiner Intensität ausgewertet. Unterschreitet die Intensität des aufgenommenen Lichtsignals einen Mindestschwellwert, so wird das Sperrsignal erzeugt. Vorzugsweise wird zusätzlich die Signalform des aufgenommenen Lichtsignals ausgewertet. Weist das empfangene Lichtsignal bei einer Intensität überhalb des Mindestschwellwerts auch abklingende Signalform auf, so kann auf einen funktionstüchtigen Zündkreis geschlossen werden: Das Sperrsignal wird nicht erzeugt. Bei allen anderen Auswerteergebnissen wird das Sperrsignal erzeugt. Auf einen defekten Zündkreis hinweisende Fremdlichteinwirkung, die gewöhnlich nicht abklingende Signalform aufweist, wird damit erkannt. Alternativ oder zusätzlich kann die Wellenlänge des empfangenen Lichtsignals ausgewertet werden. Da phophorisierendes Material Licht mit einem engen Wellenlängenbereich abgibt, kann auch ein Sperrsignal erzeugt werden, wenn die Wellenlänge des empfangenen Lichtsignals von der Wellenlänge des durch das phoshorisierende Element abgegebenen Lichts abweicht. Wird diese Auswertung zusätzlich zur Auswertung der Intensität und der Signalform des empfangenen Lichtsignals abgegeben, kann sehr exakt die Funktionsfähigkeit/Fehlerhaftgkeit des Zündkreises bestimmt werden.

Vorzugsweise wird auch bei Anwendung des phosphorisierenden Elements ein zeitlicher Rahmen für die empfangenen Lichtsignale gesetzt. Wie bei den übrigen vorgestellten Lösungsalternativen soll das aufgenommene Lichtsignal durch das Aussenden des Prüfsignals erwirkt werden. Es wird daher ein maximaler Zeitrahmen - eine erste Zeitspanne - ab dem Aussenden eines Prüfsignals gesetzt, innerhalb der empfangene Lichtsignale zur Auswertung herangezogen werden. Bei Anwendung des phosphorisierenden Elements kann zusätzlich ein Zeitpunkt nach dem Aussenden eines Prüfsignals gesetzt werden, ab dem Lichtsignale zur Auswertung zugelassen werden, um ggf Teilreflexionen des Prüfsignals von der Auswertung auszuschließen und dem mit einer geringen Totzeit verzögernden Aussenden von Lichtsignalen seitens des phosphorisierenden Elements gerecht zu werden.

Aufgrund des relativ langen zeitlichen Abstandes zwischen dem Aussenden eines Prüfsignals und dem Empfang eines Lichtsignals des phosphorisiernden Elements ist die Lichtquelle und der Lichtempfänger in einer vorteilhaften Weiterbildung der Erfindung als ein einziges optisches Bauelement ausgebildet, das elektrische Impulse beispielsweise in optische Prüfimpulse wandelt und das andererseits Lichtimpulse in elektrische Impulse wandelt. Ein solches optisches Bauelement ist beispielsweise ein Laser.

Alternativ zu der Anordnung eines Reflexionselements, eines Lasers oder eines phosphorisierenden Elements zwischen Lichtwellenleiter und Zündmaterial kann eine fehlende optische Kopplung zwischen Lichtwellenleiter und Anzünder oder ein Leitungsbruch auch alleine durch eine speziell ausgebildete Auswerteschaltung erkannt werden. Dabei wird die Zeitspanne zwischen ausgesendetem Prüfsignal und empfangenen Lichtsignal in der Auswerteschaltung ausgewertet.

Anhand der Laufzeitmessung kann beispielsweise der Ort eines Leitungsbruches festgestellt werden: Je geringer die Laufzeit zwischen ausgesendeten und empfangenen Prüfsignal ausgebildet ist, desto näher liegt die Bruch- bzw. Biegestelle bei der Auswerteschaltung. Bei nicht aufgestecktem Anzünder wird zumindest ein geringer Teil des Prüfsignals am Ende des Lichtwellenleiters reflektiert. Damit ist auch eine unzureichende optische Kopplung zwischen Lichtwellenleiter und Anzünder erkennbar und von anderen Betriebszuständen unterscheidbar. Bei der reinen Laufzeitauswertung unterscheidet sich in jedem Fall die Intensität eines am Ende des Lichtwellenleiters reflektierten Prüfsignals bei aufgesteckten Anzünder deutlich von der Intensität eines am Ende des Lichtwellenleiters reflektierten Prüfsignals bei nicht aufgestecktem Anzünder, da sich der Brechungsindex zwischen Lichtwellenleiter (Glas, Kunststoff) und Luft von dem Brechungsindex zwischen dem Lichtwellenleiter und dem Zündmaterial unterscheidet. Bei aufgesetztem Anzünder wird ein bei weitem größerer Anteil des Prüfsignals durch das Zündmaterial absorbiert als bei nicht aufgestecktem Anzünder. Das Prüfsignal darf jedoch nicht zum Zünden des Anzünders führen.

Das Sperrsignal wird dementsprechend von der Auswerteschaltung erzeugt. Das Sperrsignal wird vorzugsweise wie auch bei den anderen erfindungsgemäßen Lösungen abhängig von der Lichtintensität eines von der Auslöseeinrichtung aufgenommenen Lichtsignals erzeugt.

Eine weitere Ausgestaltung der erfindungsgemäßen Lösung des Problems liegt in der Anordnung eines zweiten Lichtwellenleiters zwischen der Auslöseeinrichtung und dem Anzünder. Dabei werden Prüfsignal und Zündsignal von der Steuerschaltung mit Lichtquelle erzeugt und in den ersten Lichtwellenleiter eingespeist. Der Lichtempfänger ist am Ende des zweiten Lichtwellenleiters seitens der Auslöseeinrichtung angeordnet. Anzünderseitig, also zwischen den Enden der Lichtwellenleiter einerseits und dem Zündmaterial andererseits ist ein Kopplungselement angeordnet, das ein vom ersten Lichtwellenleiter eintreffendes Prüfsignal in den zweiten Lichtwellenleiter einleitet. Das Kopplungselement ist dabei als Reflexionsschicht anzusehen, das Lichtsignale nicht in denselben Lichtwellenleiter reflektiert, aus dem die Lichtsignale empfangen werden, sondern in den zweiten Lichtwellenleiter. Damit gelten für das Kopplungselement die zuvor für das Reflexionselement angeführten genschaften. Beispielsweise sind die Lichtwellenleiter derart zur Reflexionsebene des Reflexionselements angeordnet, daß Einfallswinkel und Reflexionswinkel gleich sind.

Diese erfindungsgemäße Anordnung hat den Vorteil, daß die Auswerteschaltung einen äußerst einfachen Aufbau aufweist: Ist die optische Kopplung zwischen Anzünder und den Lichtwellenleitern unzureichend bzw. ist der Lichtwellenleiterweg unterbrochen, so kann der Lichtempfänger entweder nur ein äußerst geringes Lichtsignal bei einer starken Lichtwellenleiterbiegung oder kein Lichtsignal bei Leitungsunterbrechung oder nicht aufgestecktem Anzünder empfangen. Ggf reicht das Erkennen einer Leitungsunterbrechung bzw eines nicht aufgesteckten Anzünders aus, so daß eine Unterscheidungsschaltung in der Auswerteschaltung zur Unterscheidung zwischen lichtintensiven und weniger lichtintensiven aufgenommenen Lichtsignalen entfallen kann. Vorzugsweise weist die Auswerteschaltung ein Zeitfenster auf, das gleich der aus der ersten Weiterbildung der Anordnung (Stichwort: Reflexionselement) bekannten ersten Zeitspanne ist, so daß das Sperrsignal von der Auswerteschaltung erzeugt wird, wenn innerhalb dieser ersten Zeitspanne nach Aussenden eines Prüfsignals keinerlei Lichtsignal durch den Lichtempfänger aufgenommen wird.

Eine weitere Ausgestaltung der erfindungsgemäßen Lösung liegt darin, ebenfalls zwei Lichtwellenleiter zwischen Auswerteeinrichtung und Anzünder anzuordnen, wobei die Lichtquelle beiden Lichtwellenleitern zugeordnet ist. Der Lichtempfänger ist ebenfalls beiden Lichtwellenleitern zugeordnet. In der Auswerteschaltung werden Laufzeiten von auf beiden Lichtwellenleitern ausgesendeten Prüfsignalen ausgewertet und miteinander verglichen. Stimmen die ermittelten Laufzeiten nicht überein, so können Sperrsignale erzeugt werden, die ein Aussenden von Zündsignalen auf beiden Lichtwellenleitern verhindern. Alternativ kann ein Sperrsignal erzeugt werden, das ein Aussenden des Zündsignals auf dem Lichtwellenleiter verhindert, dessen zugeordneter Zündkreis als mit einem Defekt behaftet eingestuft wird.

Das Bestimmen des fehlerbehafteten Zündkreises erfolgt durch Bewertung der auf ausgesendete Prüfsignale hin aufgenommene Lichtsignale, vorzugsweise im Vergleich zu den Meßergebnissen bezüglich des weiteren Zündkreises.

Auch diese Anordnung kann zusätzlich entweder ein Reflexionselement oder ein lichterzeugendes Element zwischen dem Ende eines jeden Lichtwellenleiters und dem über die zwei Lichtwellenleiter mit der Auslöseeinrichtuung verbundenen Anzünder aufweisen.

Weitere vorteilhafte Ausgestaltungen der Erfindung sind in den Unteransprüchen gekennzeichnet.

Die Erfindung und ihre Weiterbildungen werden anhand der Zeichnung näher erläutert. Es zeigen:
- Figur 1:: Ein Blockschaltbild des erfindungsgemäßen Systems,
- Figur 2 bis 6:: Erfindungsgemäße Kopplungen zwischen einem oder mehreren Lichtwellenleitern der Anordnung und einem Anzünder, und
- Figur 7:: Ein Schaltbild einer erfindungsgemäßen Auslöseeinrichtung.

Gleiche Elemente bzw. Signale in den Figuren sind figurenübergreifend mit den gleichen Bezugszeichen gekennzeichnet.

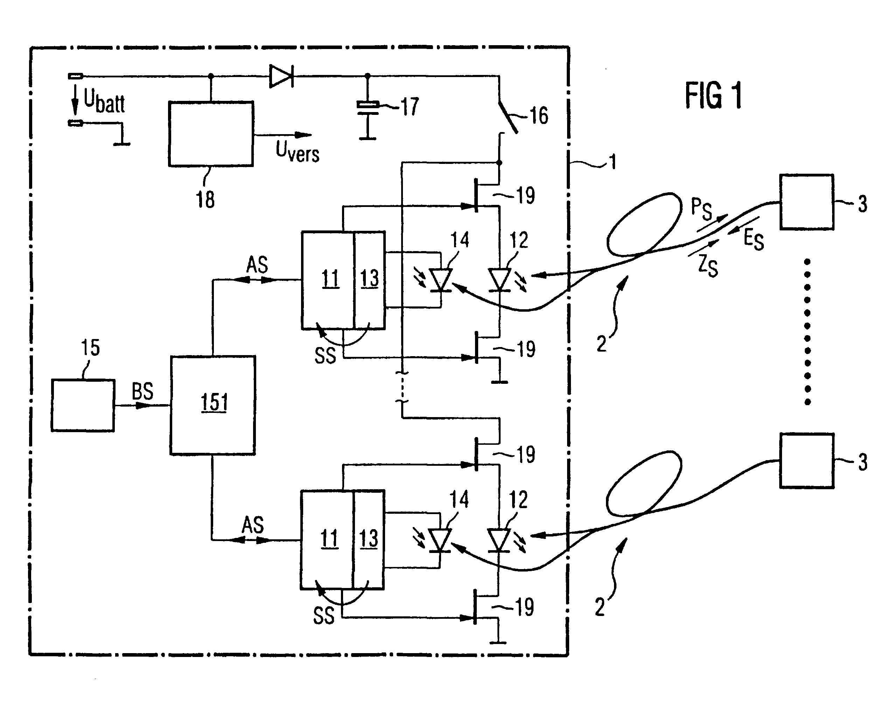

In Figur 1 ist ein erfindungsgemäßes System mit einer Auslöseeinrichtung 1, einer Spannungsquelle U_{Bat}, einem Spannungsregler 18, der eine Versorgungsspannung U_{Vers} liefert, einem Zündkondensator 17, einem Beschleunigungssensor 15, einem Sensorauswerter 151, zwei Steuerschaltungen 11, zwei Auswerteschaltungen 13, zwei Lichtempfänger 14, zwei Lichtquellen 12 und vier steuerbaren Schaltstufen 19 gezeigt.

Mit dem Spannungsregler 18 wird aus der Spannungsquelle U_{Bat} die für die Auslöseeinrichtung 1 notwendige Versorgungsspannung Uᵥₑᵣₛ abgeleitet. Zudem wird über die Spannungsquelle U_{Bat} der Zündkondensator 17 aufgeladen, der als Reserveenergiequelle zum Zünden der von der Auslöseeinrichtung angesteuerten Anzündern dient. Die Spannungsquelle U_{Bat} und der Zündkondensator 17 sind über einen Safing-Sensor 16, der beispielsweise als Beschleunigungsschalter ausgebildet ist, mit Auslösekreisen 12,19 verbunden, die jeweils zwei steuerbare Schaltstufen 19 und eine Lichtquelle 12 zwischen den steuerbaren Schaltstufen 19 aufweisen. Die einzelnen Auslösekreise sind zueinander parallel angeordnet. Eine Steuerschaltung 11 dient zur Ansteuerung von je zwei zugeordneten steuerbaren Schaltstufen 19 eines Auslösekreises. Jedem Auslösekreis ist ferner ein Lichtempfänger 14 zugeordnet, der mit einer Auswerteschaltung 13 verbunden ist.

Vom Beschleunigungssensor 15 werden Fahrzeugbeschleunigungen aufgenommen, die als Beschleunigungssignale BS zum Sensorauswerter 151 geliefert und dort ausgewertet werden. Sollen ein oder mehrere ggf. ausgewählte Rückhaltemittel der Anordnung zum Insassenschutz aufgrund der Auswertung gelieferten Beschleunigungssignale BS ausgelöst werden, gibt der Sensorauswerter 151 ein entsprechendes Auslösesignal AS an die betreffende Steuerschaltung 11. Die Steuerschaltung 11 veranlaßt ein Durchschalten der zugeordneten Schaltstufen 19, wodurch ein Strom durch die Lichtquelle 12 fließt, was zum Aussenden eines hochenergetischen optischen Zündsignals ZS führt.

Jede Lichtquelle 12 ist über einen Lichtwellenleiter 2 optisch mit einem Anzünder 3 des zugeordneten Rückhaltemittels gekoppelt. Das Zündsignal ZS wird dem Anzünder 3 zugeführt, so daß das Zündmaterial des Anzünders 3 optisch gezündet und dadurch das Rückhaltemittel ausgelöst wird. Über die Lichtquelle 12 wird ferner ein durch die Steuerschaltung 11 ausgelöstes optisches Prüfsignal PS an den Anzünder 3 übermittelt. Lichtsignale ES, die an die Auslöseeinrichtung 1 übermittelt werden, werden von dem Lichtempfänger 14 je Auslösekreis aufgenommen und in der zugeordneten Auswerteschaltung 13 ausgewertet. Abhängig von den empfangenen Lichtsignalen ES werden Steuersignale SS erzeugt, die wiederum die eigene zugeordnete Steuerschaltung 11, anderen Auslösekreisen zugeordnete Steuerschaltungen 11 oder auch den Sensorauswerter 151 in ihrer Arbeitsweise beeinflussen.

Die Lichtquellen 12 sind vorzugsweise als Laserquellen, insbesondere als Laserdioden ausgebildet. Die Lichtempfänger 14 sind vorzugsweise als Phototransistoren oder Photodioden ausgebildet. Zum Aussenden von Zündsignalen ZS sind insbesondere Laserquellen vorteilhaft, die Zündsignale ZS mit einer ausreichenden Energie zum Zünden eines Anzünders 3 erzeugen können. Zum Aussenden von Prüfsignalen PS, die niederenergetisch ausgebildet sein können, können beliebige Leuchtdioden verwendet werden, die auch nicht-monochromatisches Licht erzeugen. Vorzugsweise wird eine Infrarot-Leuchtdiode zum Aussenden der Prüfsignale verwendet, während zum Aussenden des Zündsignals eine Laserdiode verwendet wird.

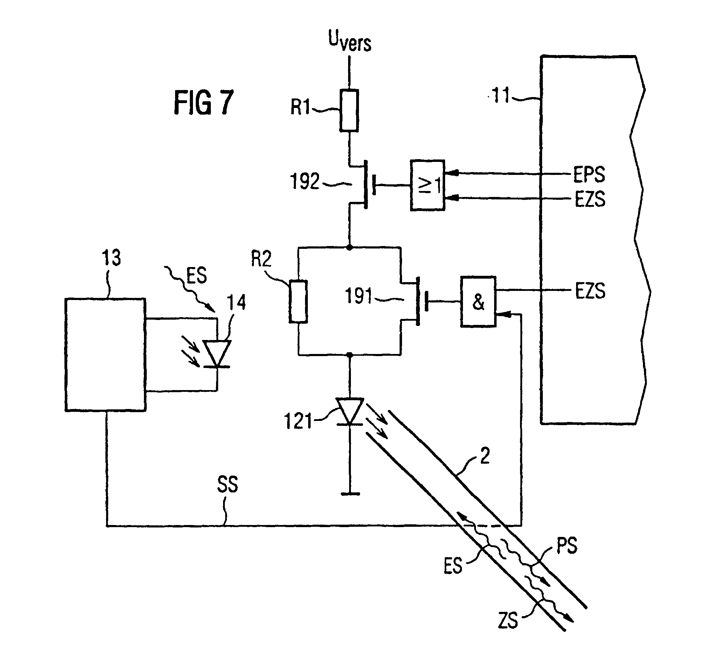

In Figur 7 ist eine beispielhafte Schaltungsanordnung eines Ausschnitts einer Auslöseeinrichtung 1 gezeigt, die eine Laserdiode 121 zum Aussenden sowohl des Zündsignals ZS als auch des Prüfsignals PS aufweist: Dabei ist die Laserdiode 121 zum einen mit Masse, zum anderen in Serie mit einem Widerstand R2 und einem steuerbarem Schalter 191 verbunden sowie in Serie mit einem weiteren steuerbaren Schalter 192, einem Widerstand R1 und einer Versorgungsspannung U_{Vers}. Der Steuereingang des ersten steuerbaren Schalters 191 ist mit einem UND-Gatter & verbunden, an dessen Eingängen ein elektrisches Zündsignal EZS von der Steuerschaltung 11 und das von der Auswerteschaltung 13 geliefertes Sperrsignal SS anliegt. Der Steuereingang des weiteren steuerbaren Schalters 192 ist mit einem ODER-Gatter >1 verbunden, an dessen Eingängen das elektrische Zündsignal EZS und das elektrische Prüfsignal EPS der Steuerschaltung 11 anliegen.

Die Laserdiode 121 ist mit dem Lichtwellenleiter 2 optisch verbunden. Soll ein optisches Zündsignal ZS von der Auslöseeinrichtung 2 abgesetzt werden, so wird von der Steuerschaltung 11 beispielsweise das elektrische Zündsignal EZS mit einer 1 belegt, das Sperrsignal SS der Auswerteschaltung weist bei nicht-fehlerbehaftetem Zündkreis eine 1 auf. Damit werden die steuerbaren Schalter 191 und 192 durchgeschaltet, so daß der Widerstand R2 kurzgeschlossen wird und ein hoher Strom durch die Lichtquelle 12 fließt. Ein hochenergetisches optisches Zündsignal ZS auf dem Lichtwellenleiter 2 ist die Folge.

Soll ein optisches Prüfsignal PS über den Lichtwellenleiter 2 abgesetzt werden, so ist das elektrische Zündsignal EZS von der Steuerschaltung 11 mit einer 0 belegt, das elektrische Prüfsignal EPS dagegen mit einer 1, so daß der steuerbare Schalter 192 durchgeschaltet ist. Bei vorheriger Belegung des Sperrsignals mit einer 1 ist der steuerbare Schalter 191 nichtleitend, so daß an dem Widerstand R2 Spannung abfällt und damit ein niedriger Strom durch die Lichtquelle 12 fließt, was ein niederenergetisches optisches Zündsignal PS auf dem Lichtwellenleiter 2 zur Folge hat. Wird nun beispielsweise durch das über den Lichtwellenleiter 2 empfangene optische Lichtsignal ES von der Auswerteschaltung 13 ein Fehler im Zündkreis 2,3 erkannt, so wird das Sperrsignal SS von der Auswerteschaltung 13 mit einer 0 belegt, so daß auch bei einem Belegen des elektrischen Zündsignals mit einer 1 durch die Steuerschaltung 11 das Absetzen eines optischen Zündsignals ZS in jedem Fall verhindert wird.

Die Steuerschaltung 11, die Auswerteschaltung 13 und der Sensorauswerter 151 sind vorzugsweise gemeinsam als Mikroprozessor implementiert.

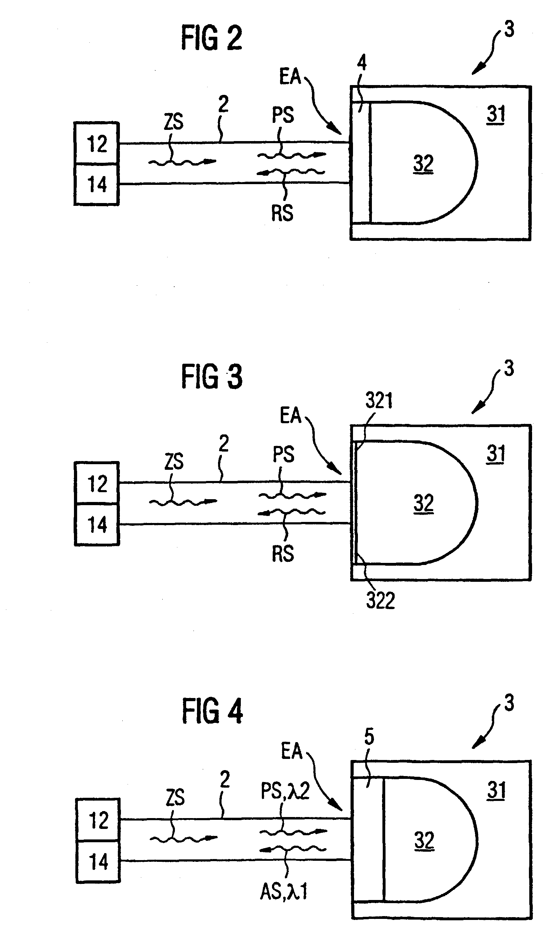

In den Figuren 2 bis 5 ist die Anbindung eines Anzünders 3 an zumindest einen Lichtwellenleiter 2 gezeigt. Der Anzünder 3 weist dabei in der Regel ein Gehäuse 31 auf, das eine Kammer enthält, die mit einem Zündmaterial 32 angefüllt ist. In Figur 2 ist zwischen dem Ende EA des Lichtwellenleiters 2 und dem Zündmaterial 32 ein Reflexionselement 4 angeordnet. Prüfsignale PS werden an dem Reflexionselement 4 reflektiert und als Reflexionssignale RS zur Auslöseeinrichtung 1 zurückübertragen. Zündsignale ZS zerstören die Reflexionsschicht 4, so daß die in den Zündsignalen ZS enthaltene Energie in das Zündmaterial 32 transportiert wird. Alternativ werden durch hochenergetische Zündsignale ZS die Transmissionseigenschaften des Reflexionselements 4 dahingehend geändert, daß hochenergetische Signale zum Zündmaterial 32 durchgelassen werden. In Figur 3 dient die der Stirnseite des Lichtwellenleiters 2 zugewandte Oberfläche 321 des Zündmaterials 32 als Reflexionsschicht. Der Lichtwellenleiter 2 ist über eine die optischen Übertragung nicht beeinflussende Verbindungsfolie 322 mit dem Zündmaterial 32 verbunden. Diese Verbindungsfolie 322 dient lediglich dazu, das ggf in pulverisierter Form vorliegende Zündmaterial 32 vor dem Austreten aus dem Gehäuse 31 des Anzünders 3 zu schützen. Im übrigen können sonstige diverse optische Elemente zwischen Lichtwellenleiter 2 und Zündmaterial 32 angeordnet sein, wie zum Beispiel Linsen zum Fokussieren des Zündsignals auf einen festgelegten Punkt im Zündmaterial 32.

In Figur 4 ist die erfindungsgemäße Lösung mit einem lichterzeugenden Element 5 gezeigt. Ein auf das lichterzeugende Element 5 mit der Wellenlänge λ2 treffendes Prüfsignal PS hat dabei ein Rücksenden eines von dem lichterzeugenden Element 5 erzeugten Lichtsignals AS mit der Wellenlänge A1, die sich von der Wellenlänge λ2 unterscheidet, zur Folge. Für das Zündsignal ZS gelten die Ausführungen zu den Figuren 2 und 3.

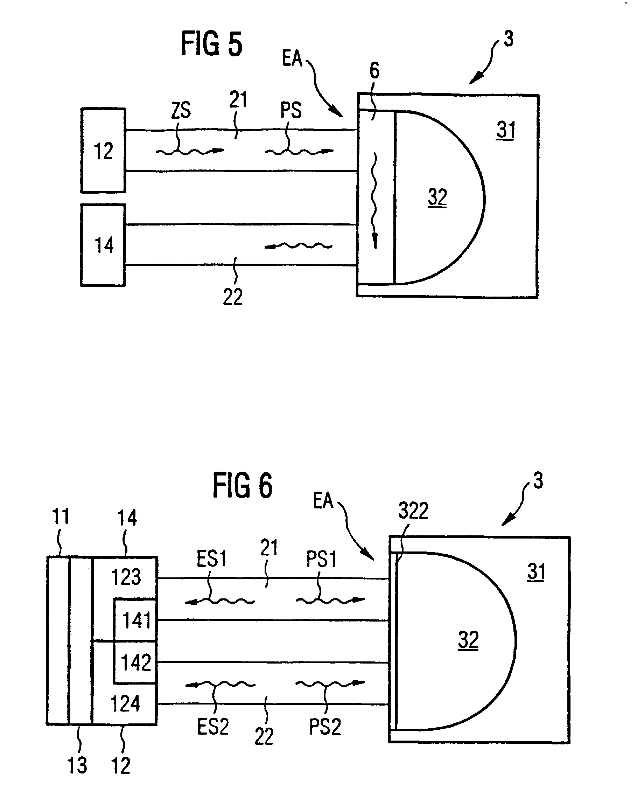

In der Figur 5 sind zwei Lichtwellenleiter 21 und 22 mit dem Anzünder 3 verbunden. Dabei weist der Anzünder 3 ein Kopplungselement 6 auf, das ein über den ersten Lichtwellenleiter 21 eintreffendes Prüfsignal PS auf den zweiten Lichtwellenleiter 22 umlenkt. Das Kopplungselement 6 kann in diesem Fall als speziell ausgebildete Reflexionsschicht angesehen werden.

In Figur 6 ist die erfindungsgemäße Lösung mit zwei Lichtwellenleitern dargestellt, wobei Laufzeitunterschiede von Prüfsignalen auf den Lichtwellenleitern 21 und 22 ausgewertet werden. Die Lichtwellenleiter 21 und 22 können dabei seitens der Auslöseeinrichtung von einer Lichtquelle 12 gespeist werden, die vorzugsweise je einen Lichtsender 123,124 für jeden Lichtwellenleiter 21, 22 aufweist. Jeder Lichtsender 123,124 kann dann unabhängig vom anderen Lichtsender 124,123 aktiviert werden. Bei Anordnungen, die über nur eine Lichtquelle 12 mit einem einzigen Lichtsender für beide Lichtwellenleiter 21,22 verfügt, können Zünd- und Prüfsignale ZS,PS nur gleichzeitig auf beide Lichtwellenleiter 21,22 abgesetzt werden. Bei erkanntem Fehler im Zündkreis und anschließendem Sperren von auszusendenden Zündsignalen ist ein selektives Auswählen eines Zündkreises nicht mehr möglich. In der Regel weist der Lichtempfänger 14 je einen Phototransistor 141, 142 o.ä. je Lichtwellenleiter 21, 22 auf.

Das erfindungsgemäße Systm ist nicht auf einen oder zwei Anzünder beschränkt. Die Ansteuerung der Anzünder kann dabei gemäß Figur 1 über Punkt-zu-Punkt-Verbindungen vollzogen werden, wobei jeweils eine Lichtquelle über einen Lichtwellenleiter mit einem Anzünder kommuniziert. Die Erfindung ist jedoch nicht auf diese Art der Kommunikation beschränkt. Es kann beliebig auch eine Lichtquelle für mehrere Anzünder vorgesehen sein, wobei durch aktive oder passive optische Muliplexvorrichtungen auch einzelne ausgewählte Anzünder ausgewählt lediglich über eine einzige Lichtquelle angesteuert werden können.

Bei Anwendungen, bei denen die Wellenlänge des empfangenen Lichtsignals ausgewertet wird, wirkt der Lichtempfänger vorzugsweise auch als Filter für diese Wellenlängen(bereiche). Dabei kann beispielsweise ein verwendeter Phototransistor eine entsprechende spektrale Kennlinie aufweisen, oder es wird dem Phototransistor ein Spektralfilter vorgeschaltet.

Vorzugsweise sind die Lichtquelle, der Lichtempfänger und die die Lichtquelle ansteuernde steuerbare Schaltstufe gemeinsam auf einem integrierten Chip angeordnet.

Der Begriff Licht bzw optisches Signal in der vorliegenden Anmeldung umfaßt auch Licht außerhalb des sichtbaren Lichts, so z.B. Infrarotstrahlung und andere Wellenlängenbereiche. So erzeugt beispielsweise eine als Lichtquelle eingesetzte Laserdiode Lichtsignale von etwa 800 nm.

## Patentansprüche

1. System zum Auslösen eines Rückhaltemittels in einem Kraftfahrzeug,
- mit einer Auslöseeinrichtung (1), die eine Steuerschaltung (11) zum Steuern einer Lichtquelle (12) aufweist, und
- mit einem optischen Übertragungsmittel (2) zum Übertragen eines von der Lichtquelle (12) aussendbaren optischen Zündsignals (ZS) zu einem Anzünder (3) des Rückhaltemittels, **dadurch gekennzeichnet,**
- **dass** veranlasst durch die Steuerschaltung (11) ein optisches Prüfsignal (PS) durch die Lichtquelle (12) ausgesendet wird,
- **dass** die Auslöseeinrichtung (1) eine Auswerteschaltung (13) zum Auswerten eines über das optische Übertragungsmittel (2) zur Auslöseeinrichtung (1) übertragenen und von einem Lichtempfänger (14) aufgenommenen Lichtsignals (ES) aufweist, und
- **dass** von der Auswerteschaltung (13) in Abhängigkeit von der Auswertung des empfangenen Lichtsignals (ES) ein Sperrsignal (SS) erzeugt wird, durch das ein Aussenden des Zündsignals (ZS) verhindert wird.

2. System nach Anspruch 1, **dadurch gekennzeichnet, dass** das optische Übertragungsmittel (2) als Lichtwellenleiter ausgebildet ist.

3. System nach Anspruch 1, **dadurch gekennzeichnet, dass** die Lichtquelle (12) als Laserquelle (121) ausgebildet ist.

4. System nach Anspruch 1, **dadurch gekennzeichnet, dass** die Lichtquelle (12) eine Laserquelle (121) zum Aussenden des Zündsignals (ZS) und einen sich von der Laserquelle (121) unterscheidenden Lichtsender (122) zum Aussenden des Prüfsignals (PS) aufweist.

5. System nach Anspruch 1, **dadurch gekennzeichnet, dass** das Zündsignal (ZS) eine erste Lichtintensität (LI1) aufweist und das Prüfsignal (PS) eine zweite, geringere Lichtintensität (LI2).

6. System nach Anspruch 1, **dadurch gekennzeichnet, dass** die Auswerteschaltung (13) ein Mittel zum Vergleichen des aufgenommenen Lichtsignals (ES) mit einem Schwellwert (MLI) aufweist.

7. System nach Anspruch 2, **dadurch gekennzeichnet, dass** zwischen dem anzünderseitigen Ende (AE) des Lichtwellenleiters (2) und einem Zündmaterial (32) des Anzünders (3) ein Reflexionselement (4) zum Reflektieren des Prüfsignals (PS) angeordnet ist.

8. System nach Anspruch 5 und 7, **dadurch gekennzeichnet, dass** das Reflexionselement (4) bei Überschreiten einer zugeführten Mindestenergie zumindest weitgehend lichtdurchlässig wird.

9. System nach Anspruch 7, **dadurch gekennzeichnet, dass** der Anzünder (3) als eine vom Lichtwellenleiter (2) baulich getrennte Einheit ausgebildet und über ein Befestigungselement mit dem Lichtwellenleiter (2) verbunden ist, und dass das Reflexionselement (4) dem Anzünder (3) zugeordnet ist.

10. System nach Anspruch 7, **dadurch gekennzeichnet, dass** das Reflexionselement (4) als dünne Reflexionsschicht oder als Reflexionsfolie ausgebildet ist.

11. System nach Anspruch 7, **dadurch gekennzeichnet, dass** das Reflexionselement (4) eine Aluminiumfolie ist.

12. System nach Anspruch 7, **dadurch gekennzeichnet, dass** eine Oberfläche (321) des Zündmaterials (32) als Reflexionselement (4) verwendet wird.

13. System nach Anspruch 12, **dadurch gekennzeichnet, dass** das Zündmaterial (32) Grafit enthält.

14. System nach Anspruch 1, **dadurch gekennzeichnet, dass** zwischen dem anzünderseitigen Ende (AE) des Lichtwellenleiters (2) und einem Zündmaterial (32) des Anzünders (3) ein lichterzeugendes Element (5) zum angeregten Aussenden eines Lichtsignals (AS) einer festgelegten Wellenlänge (λ1) angeordnet ist, wobei das von der Auslöseeinrichtung (1) gelieferte Prüfsignal (PS) zur optischen Anregung dient.

15. System nach Anspruch 14, **dadurch gekennzeichnet, dass** die Wellenlänge (λ2) des von der Lichtquelle (12) ausgesendeten Prüfsignals (PS) unterschiedlich ist zur Wellenlänge (λ1) des vom lichterzeugenden Element (5) ausgesendeten Lichtsignals (AS).

16. System nach Anspruch 14, **dadurch gekennzeichnet, dass** das lichterzeugende Element (5) Galliumarsenid enthält.

17. System nach Anspruch 14, **dadurch gekennzeichnet, dass** der Anzünder (3) als eine vom Lichtwellenleiter (2) baulich getrennte Einheit ausgebildet und über ein Befestigungselement mit dem Lichtwellenleiter (2) verbunden ist, und dass das lichterzeugende Element (5) dem Anzünder (3) zugeordnet ist.

18. System nach Anspruch 14, **dadurch gekennzeichnet, dass** das Sperrsignal (SS) von der Auswerteschaltung (13) erzeugt wird, wenn ein von dem Lichtempfänger (14) aufgenommenes Lichtsignal (ES) von einer vorgegebenen Wellenlänge (λ1) abweicht.

19. System nach Anspruch 18, **dadurch gekennzeichnet, dass** die vorgegebene Wellenlänge (λ1) der Wellenlänge (λ1) des vom lichterzeugenden Element (5) abgegebenen Lichtsignals (AS) entspricht.

20. System nach Anspruch 1, **dadurch gekennzeichnet, dass** das optische Übertragungselement (2) aufweist: einen ersten Lichtwellenleiter (21), dem die Lichtquelle (12) zugeordnet ist, und einen zweiten Lichtwellenleiter (22), dem der Lichtempfänger (14) zugeordnet ist, und dass anzünderseitig ein optisches Kopplungselement (6) angeordnet ist, durch das aus dem ersten Lichtwellenleiter (21) austretendes Licht in den zweiten Lichtwellenleiter (22) eingeleitet wird.

21. System nach Anspruch 1, **dadurch gekennzeichnet, dass** das optische Übertragungselement (2) einen ersten Lichtwellenleiter (21) und einen zweiten Lichtwellenleiter (22) aufweist, dass die Lichtquelle (12) und der Lichtempfänger (14) beiden Lichtwellenleitern (21,22) zugeordnet sind, und dass die Auswerteschaltung (13) zum Auswerten von über den ersten und den zweiten Lichtwellenleiter (21,22) zur Auslöseeinrichtung (1) übertragenen Lichtsignalen (ES1,ES2) vorgesehen ist.

22. System nach Anspruch 21, **dadurch gekennzeichnet, dass** das Sperrsignal (SS) von der Auswerteschaltung (13) erzeugt wird, wenn nach dem Aussenden von Prüfsignalen (PS) auf beide Lichtwellenleiter (21, 22) ermittelte Laufzeiten nicht übereinstimmen.

23. System nach Anspruch 2, **dadurch gekennzeichnet, dass** zwischen dem anzünderseitigen Ende (AE) des optischen Übertragungsmittels (2) und einem Zündmaterial (32) des Anzünders (3) ein lichterzeugendes Element (5) angeordnet ist, das phosphorisierendes Material enthält.

24. System nach Anspruch 23, **dadurch gekennzeichnet, dass** ein einziges optisches Bauelement als Lichtquelle (12) und Lichtempfänger (14) verwendet wird.

25. System nach Anspruch 1, **dadurch gekennzeichnet, dass** von der Auswerteschaltung (13) nur Lichtsignale (ES) für die Erzeugung des Sperrsignals berücksichtigt werden, die innerhalb einer festgelegten ersten Zeitspanne (T1) nach dem Aussenden eines Prüfsignals (PS) vom Lichtempfänger (14) aufgenommenen werden.

26. System nach Anspruch 1, **dadurch gekennzeichnet, dass** das Sperrsignal (SS) von der Auswerteschaltung (13) in Abhängigkeit der Lichtintensität des empfangenen Lichtsignals (ES) erzeugt wird.

27. System nach Anspruch 26, **dadurch gekennzeichnet, dass** das Sperrsignal (SS) von der Auswerteschaltung (13) erzeugt wird, wenn die Lichtintensität des empfangenen Lichtsignals (ES) eine Mindestlichtintensität unterschreitet.

28. System nach Anspruch 1, **dadurch gekennzeichnet, dass** in der Auswerteschaltung (13) die Zeitspanne zwischen einem ausgesendeten Prüfsignal (PS) und einem empfangenen Lichtsignal (ES) ausgewertet wird.

29. System nach Anspruch 28, **dadurch gekennzeichnet, dass** das Sperrsignal (SS) von der Auswerteschaltung (13) in Abhängigkeit von der ab dem Aussenden des Prüfsignals (PS) verstrichenen Zeit erzeugt wird.

30. System nach Anspruch 1, **dadurch gekennzeichnet, dass** das Sperrsignal (SS) von der Auswerteschaltung (13) erzeugt wird, wenn innerhalb einer festgelegten zweiten Zeitspanne (T2) nach dem Aussenden eines Prüfsignals (PS) ein Lichtsignal (ES) durch den Lichtempfänger (14) aufgenommen wird.

31. System nach Anspruch 1, **dadurch gekennzeichnet, dass** der Lichtempfänger (14) ein Spektralfilter für die vorgegebene Wellenlänge (λ1) aufweist.

32. System nach Anspruch 23, **dadurch gekennzeichnet, dass** in der Auswerteschaltung (13) der Signalverlauf des aufgenommenen Lichtsignals (ES) ausgewertet wird.

33. System nach Anspruch 23, **dadurch gekennzeichnet, dass** der Anzünder (3) als eine vom Lichtwellenleiter (2) baulich getrennte Einheit ausgebildet und über ein Befestigungselement mit dem Lichtwellenleiter (2) verbunden ist, und dass das lichterzeugende und phosphorisierendes Material enthaltende Element (5) dem Anzünder (3) zugeordnet ist.

## Claims

1. System for activating a restraint in a motor vehicle,
- with an activation unit (1) which has a control circuit (11) to control a light source (12), and
- with an optical transmission device (2) to transmit an optical ignition signal (ZS) which can be emitted by the light source (12) to an ignition device (3) in the restraint,
**characterised in that**,
- the control circuit (11) causes an optical test signal (PS) to be emitted by the light source (12),
- the activation unit (1) has an analysis circuit (13) to analyse a light signal (ES) transmitted via the optical transmission device (2) to the activation unit (1) and received by a light receiver (14), and
- a blocking signal (SS) is generated by the analysis circuit (13) on the basis of the analysis of the received light signal (ES), to prevent emission of the ignition signal (ZS).

2. System according to Claim 1, **characterised in that** the optical transmission device (2) is in the form of an optical waveguide.

3. System according to Claim 1, **characterised in that** the light source (12) is in the form of a laser source (121).

4. System according to Claim 1, **characterised in that** the light source (12) has a laser source (121) to emit the ignition signal (ZS) and a light transmitter (122), which is different from the laser source (121), to emit the test signal (PS).

5. System according to Claim 1, **characterised in that** the ignition signal (ZS) has a first light intensity (LI1) and the test signal (PS) has a second, lower light intensity (LI2).

6. System according to Claim 1, **characterised in that** the analysis circuit (13) has a device to compare the received light signal (ES) with a threshold value (MLI).

7. System according to Claim 2, **characterised in that** a reflective element (4) is located between the ignition device end (AE) of the optical waveguide (2) and an ignition material (32) in the ignition device (3) to reflect the test signal (PS).

8. System according to Claims 5 and 7, **characterised in that** the reflective element (4) becomes at least largely translucent when a minimum energy supply level is exceeded.

9. System according to Claim 7, **characterised in that** the ignition device (3) is a structurally separate unit from the optical waveguide (2) and is connected via a securing element to the optical waveguide (2), and that the reflective element (4) is assigned to the ignition device (3).

10. System according to Claim 7, **characterised in that** the reflective element (4) is in the form of a thin reflecting coating or a reflective film.

11. System according to Claim 7, **characterised in that** the reflective element (4) is an aluminium film.

12. System according to Claim 7, **characterised in that** a surface (321) of the ignition material (32) is used as a reflective element (4).

13. System according to Claim 12, **characterised in that** the ignition material (32) contains graphite.

14. System according to Claim 1, **characterised in that** a light-generating element (5) is located between the ignition device end (AE) of the optical waveguide (2) and an ignition material (32) in the ignition device (3), which is stimulated to emit a light signal (AS) of a defined wavelength (λ1), with the test signal (PS) supplied by the activation unit (1) used for optical stimulation.

15. System according to Claim 14, **characterised in that** the wavelength (λ2) of the test signal (PS) emitted by the light source (12) is different from the wavelength (λ1) of the light signal (AS) emitted by the light-generating element (5).

16. System according to Claim 14, **characterised in that** the light-generating element (5) contains gallium arsenide.

17. System according to Claim 14, **characterised in that** the ignition device (3) is a structurally separate unit from the optical waveguide (2) and is connected via a securing element to the optical waveguide (2), and that the light-generating element (5) is assigned to the ignition device (3).

18. System according to Claim 14, **characterised in that** the blocking signal (SS) is generated by the analysis circuit (13), if a light signal (ES) received by the light receiver (14) deviates from a predefined wavelength (λ1).

19. System according to Claim 18, **characterised in that** the predefined wavelength (λ1) corresponds to the wavelength (λ1) of the light signal (AS) emitted by the light-generating element (5).

20. System according to Claim 1, **characterised in that** the optical transmission element (2) has: a first optical waveguide (21), to which the light source (12) is assigned, and a second optical waveguide (22), to which the light receiver (14) is assigned, and that an optical link element (6) is located on the ignition device side, through which light exiting from the first optical waveguide (21) is passed into the second optical waveguide (22).

21. System according to Claim 1, **characterised in that** the optical transmission element (2) has a first optical waveguide (21) and a second optical waveguide (22), the light source (12) and the light receiver (14) are assigned to the two optical waveguides (21, 22) and the analysis circuit (13) is provided to analyse light signals (ES1, ES2) transmitted via the first and second optical waveguides (21, 22) to the activation unit (1).

22. System according to Claim 21, **characterised in that** the blocking signal (SS) is generated by the analysis circuit (13) if the runtimes calculated after the emission of test signals (PS) on both optical waveguides (21, 22) do not correspond.

23. System according to Claim 2, **characterised in that** a light-generating element (5) is located between the ignition device end (AE) of the optical transmission device (2) and an ignition material (32) in the ignition device (3), said element containing phosphorescent material.

24. System according to Claim 23, **characterised in that** a single optical component is used as the light source (12) and the light receiver (14).

25. System according to Claim 1, **characterised in that** only light signals (ES) which are received within a defined first time interval (T1) after emission of a test signal (PS) by the light receiver (14) are taken into account by the analysis circuit (13) for generation of the blocking signal.

26. System according to Claim 1, **characterised in that** the blocking signal (SS) is generated by the analysis circuit (13) on the basis of the light intensity of the received light signal (ES).

27. System according to Claim 26, **characterised in that** the blocking signal (SS) is generated by the analysis circuit (13) if the light intensity of the received light signal (ES) is below a minimum light intensity.

28. System according to Claim 1, **characterised in that** the time interval between an emitted test signal (PS) and a received light signal (ES) is analysed in the analysis circuit (13).

29. System according to Claim 28, **characterised in that** the blocking signal (SS) is generated by the analysis circuit (13) on the basis of the time elapsing after emission of the test signal (PS).

30. System according to Claim 1, **characterised in that** the blocking signal (SS) is generated by the analysis circuit (13) if a light signal (ES) is received by the light receiver (14) within a defined second time interval (T2) after emission of a test signal (PS).

31. System according to Claim 1, **characterised in that** the light receiver (14) has a spectral filter for the predefined wavelength (λ1).

32. System according to Claim 23, **characterised in that** the signal pattern of the received light signal (ES) is analysed in the analysis circuit (13).

33. System according to Claim 23, **characterised in that** the ignition device (3) is a structurally separate unit from the optical waveguide (2) arid is connected via a securing element to the optical waveguide (2), and that the light-generating element (5) containing the phosphorescent material is assigned to the ignition device (3).

## Revendications

1. Système pour déclencher un moyen de retenue dans un véhicule automobile, comprenant
- un dispositif de déclenchement (1) qui présente un circuit de commande (11) pour commander une source lumineuse (12) et
- un moyen de transmission optique (2) pour transmettre un signal de mise à feu optique (ZS) pouvant être émis par la source lumineuse (12) à un détonateur (3) du moyen de retenue, **caractérisé**
- **en ce que**, sous la commande du circuit de commande (11) un signal de contrôle optique (PS) est émis par la source lumineuse (12),
- **en ce que** le dispositif de déclenchement (1) présente un circuit d'analyse (13) destiné à analyser un signal lumineux (ES) transmis au dispositif de déclenchement (1) par l'intermédiaire du moyen de transmission optique (2), et reçu par un récepteur de lumière (14), et
- **en ce que** le circuit d'analyse (13) produit, en fonction de l'analyse du signal lumineux (ES) reçu, un signal d'interdiction (SS) qui interdit l'émission d'un signal de mise à feu (ZS).

2. Système selon la revendication 1, **caractérisé en ce que** le moyen de transmission optique (2) est constitué par un guide d'ondes lumineuses.

3. Système selon la revendication 1, **caractérisé en ce que** la source lumineuse (12) est constituée par une source laser (121).

4. Système selon la revendication 1, **caractérisé en ce que** la source lumineuse (12) présente une source laser (121) destinée à émettre le signal de mise à feu (ZS) et un émetteur de lumière (122), différent de la source laser (121), destiné à émettre le signal de contrôle (PS).

5. Système selon la revendication 1, **caractérisé en ce que** le signal de mise à feu (ZS) présente une première intensité lumineuse (LI1) et le signal de contrôle (PS) présente une deuxième intensité lumineuse (LI2), plus faible.

6. Système selon la revendication 1, **caractérisé en ce que** le circuit d'analyse (13) présente un moyen pour comparer le signal lumineux (ES) reçu à une valeur de seuil (MLI).

7. Système selon la revendication 2, **caractérisé en ce qu'**un élément réfléchissant (4) est disposé entre l'extrémité côté détonateur (AE) du guide d'ondes lumineuses (2) et une matière détonante (32) du détonateur (3) pour réfléchir le signal de contrôle (PS).

8. Système selon la revendication 5 et 7, **caractérisé en ce que** l'élément réfléchissant (4) est au moins fortement transparent pour la lumière lorsqu'on dépasse une énergie minimale acheminée.

9. Système selon la revendication 7, **caractérisé en ce que** le détonateur (3) est constitué par une unité séparée en construction du guide d'ondes lumineuses (2) et il est relié au guide d'ondes lumineuses (2) à l'aide d'un élément de fixation, et **en ce que** l'élément réfléchissant (4) est associé au détonateur (3).

10. Système selon la revendication 7, **caractérisé en ce que** l'élément réfléchissant (4) est constitué par une couche réfléchissante mince ou par une pellicule réfléchissante.

11. Système selon la revendication 7, **caractérisé en ce que** l'élément réfléchissant (4) est une pellicule d'aluminium.

12. Système selon la revendication 7, **caractérisé en ce qu'**une surface (321) de la matière détonante (32) est utilisée comme élément réfléchissant (4).

13. Système selon la revendication 12, **caractérisé en ce que** la matière détonante (32) contient du graphite.

14. Système selon la revendication 1, **caractérisé en ce qu'**un élément producteur de lumière (5) destiné à émettre, lorsqu'il est excité, un signal lumineux (AS) d'une longueur d'onde déterminée (λ1) est disposé entre l'extrémité côté détonateur (AE) du guide d'ondes lumineuses (2) et une matière détonante (32) du détonateur (3), le signal de contrôle (PS) délivré par le dispositif de déclenchement (1) servant ici pour l'excitation optique.

15. Système selon la revendication 14, **caractérisé en ce que** la longueur d'onde (λ2) du signal de contrôle (PS) émis par la source lumineuse (12) est différente de la longueur d'onde (λ1) du signal lumineux (AS) émis par l'élément producteur de lumière (5).

16. Système selon la revendication 14, **caractérisé en ce que** l'élément producteur de lumière (5) contient de l'arséniure de gallium.

17. Système selon la revendication 14, **caractérisé en ce que** le détonateur (3) est réalisé sous la forme d'une unité qui est séparée en construction du guide d'ondes lumineuses (2) et est reliée au guide d'ondes lumineuses (2) au moyen d'un élément de fixation, et **en ce que** l'élément producteur de lumière (5) est associé au détonateur (3).

18. Système selon la revendication 14, **caractérisé en ce que** le signal d'interdiction (SS) est produit par le circuit d'analyse (13) lorsqu'un signal lumineux (ES) reçu par le récepteur de lumière (14) s'écarte d'une longueur d'onde prédéterminée (λ1).

19. Système selon la revendication 18, **caractérisé en ce que** la longueur d'onde prédéterminée (λ1) correspond à la longueur d'onde (λ1) du signal lumineux (AS) émis par l'élément producteur de lumière (5).

20. Système selon la revendication 1, **caractérisé en ce que** l'élément de transmission optique (2) présente : un premier guide d'ondes lumineuses (21) auquel la source lumineuse (12) est associée et un deuxième guide d'ondes lumineuses (22) auquel le récepteur de lumière (14) est associé et **en ce que**, sur le côté détonateur, est disposé un élément de couplage optique (6) par lequel la lumière sortant du premier guide d'ondes lumineuses (21) est introduite dans le deuxième guide d'ondes lumineuses (22).

21. Système selon la revendication 1, **caractérisé en ce que** l'élément de transmission optique (2) comprend un premier guide d'ondes lumineuses (21) et un deuxième guide d'ondes lumineuses (22), **en ce que** la source lumineuse (12) et le récepteur de lumière (14) sont associés aux deux guides d'ondes lumineuses (21, 22) et **en ce que** le circuit d'analyse (13) est prévu pour analyser des signaux lumineux (ES1, ES2) transmis au dispositif de déclenchement (1) par l'intermédiaire des premier et deuxième guides d'ondes lumineuses (21, 22).

22. Système selon la revendication 21, **caractérisé en ce que** le signal d'interdiction (SS) est produit par le circuit d'analyse (13) lorsqu'après l'émission de signaux de contrôle (PS) sur les deux guides d'ondes lumineuses (21, 22), les temps de parcours obtenus ne concordent pas.

23. Système selon la revendication 2, **caractérisé en ce qu'**entre l'extrémité côté détonateur (AE) du moyen de transmission optique (2) et une matière détonante (32) du détonateur (3), est disposé un élément producteur de lumière (5) qui contient une matière phosphorescente.

24. Système selon la revendication 23, **caractérisé en ce qu'**on utilise un unique composant optique comme source lumineuse (12) et comme récepteur de lumière (14).

25. Système selon la revendication 1, **caractérisé en ce que** le circuit d'analyse (13) ne prend en compte pour la production du signal d'interdiction que des signaux lumineux (ES) qui sont reçus par le récepteur de lumière (14) dans un premier laps de temps déterminé (T1) après l'émission d'un signal de contrôle (PS).

26. Système selon la revendication 1, **caractérisé en ce que** le signal d'interdiction (SS) est produit par le circuit d'analyse (13) en fonction de l'intensité lumineuse du signal lumineux (ES) reçu.

27. Système selon la revendication 26, **caractérisé en ce que** le signal d'interdiction (SS) est produit par le circuit d'analyse (13) lorsque l'intensité lumineuse du signal lumineux (ES) reçu est inférieure à une intensité lumineuse minimale.

28. Système selon la revendication 1, **caractérisé en ce que** dans le circuit d'analyse (13), on analyse le laps de temps entre un signal de contrôle (PS) émis et un signal lumineux (ES) reçu.

29. Système selon la revendication 28, **caractérisé en ce que** le signal d'interdiction (SS) est produit par le circuit d'analyse (13) en fonction du temps écoulé à partir de l'émission du signal de contrôle (PS).

30. Système selon la revendication 1, **caractérisé en ce que** le signal d'interdiction (SS) est produit par le circuit d'analyse (13) lorsqu'un signal lumineux (ES) est reçu par le récepteur de lumière (14) dans les limites d'un deuxième laps de temps déterminé (T2) après l'émission d'un signal de contrôle (PS).

31. Système selon la revendication 1, **caractérisé en ce que** le récepteur de lumière (14) présente un filtre spectral pour la longueur d'onde prédéterminée (λ1).

32. Système selon la revendication 23, **caractérisé en ce que** la courbe de variation du signal lumineux (ES) reçu est analysée dans le circuit d'analyse (13).

33. Système selon la revendication 23, **caractérisé en ce que** le détonateur (3) est constitué par une unité séparée en construction du guide d'ondes lumineuses (2) et est relié au guide d'ondes lumineuses (2) au moyen d'un élément de fixation et **en ce que** l'élément (5) qui contient de la matière productrice de lumière et phosphorescente est associé au détonateur (3).
